# EUROPEAN PATENT SPECIFICATION

(11) **EP 4 369 630 B1**
(45) Date of publication and mention of the grant of the patent: **11.11.2026**
(21) Application number: 23205133.4
(22) Date of filing: 23.10.2023
(51) Int. Cl.: H04B 7/155, H02J 50/00, H02J 50/20, H02J 50/50

(54) **RIS ASSISTED ENERGY STEERING FOR ENERGY HARVESTING DEVICES**
RIS-UNTERSTÜTZTE ENERGIELENKUNG FÜR ENERGIEGEWINNUNGSVORRICHTUNGEN
DIRECTION ASSISTÉE PAR RIS POUR DISPOSITIFS DE COLLECTE D'ÉNERGIE

(30) Priority: 09.11.2022 GB 202216686
(43) Date of publication of application: 15.05.2024
(73) Proprietor: Nokia Technologies Oy, 02610 Espoo (FI)
(72) Inventor: TAYYAB, Muhammad, Oulu (FI); DAMPAHALAGE, Dilin Lalindra, Oulu (FI); RATASUK, Rapeepat, Inverness, IL (US); MANGALVEDHE, Nitin, Hoffman Estates, IL (US); BUTT, Muhammad Majid, Naperville, IL (US); LEE, Gilsoo, Naperville, IL (US)
(74) Representative: Mudge, Kevin

(56) References cited:
- US-A1- 2019 341 954
- ALY SABRI ABDALLA ET AL: "UAVs with Reconfigurable Intelligent Surfaces: Applications, Challenges, and Opportunities", ARXIV.ORG, CORNELL UNIVERSITY LIBRARY, 201 OLIN LIBRARY CORNELL UNIVERSITY ITHACA, NY 14853, 8 December 2020 (2020-12-08), XP081834309
- SALAH MOSTAFA ET AL: "Paving the way for economically accepted and technically pronounced smart radio environment", CHINA COMMUNICATIONS, CHINA INSTITUTE OF COMMUNICATIONS, PISCATAWAY, NJ, USA, vol. 19, no. 8, 17 August 2022 (2022-08-17), pages 247 - 266, XP011917528, ISSN: 1673-5447, [retrieved on 20220817], DOI: 10.23919/JCC.2022.08.018
- NGUYEN MINH TRAN ET AL: "Reconfigurable Intelligent Surface-Aided Wireless Power Transfer Systems: Analysis and Implementation", ARXIV.ORG, CORNELL UNIVERSITY LIBRARY, 201 OLIN LIBRARY CORNELL UNIVERSITY ITHACA, NY 14853, 12 June 2021 (2021-06-12), XP081993912

## Description

### TECHNICAL FIELD

This description relates to telecommunications systems.

### BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3^{rd} Generation Partnership Project (3GPP). A recent development in this field is often referred to as the long-term evolution (LTE) of the Universal Mobile Telecommunications System (UMTS) radio-access technology. E-UTRA (evolved UMTS Terrestrial Radio Access) is the air interface of 3GPP's LTE upgrade path for mobile networks. In LTE, base stations or access points (APs), which are referred to as enhanced Node AP (eNBs), provide wireless access within a coverage area or cell. In LTE, mobile devices, or mobile stations are referred to as user equipment (UE). LTE has included a number of improvements or developments.

A global bandwidth shortage facing wireless carriers has motivated the consideration of the underutilized millimeter wave (mmWave) frequency spectrum for future broadband cellular communication networks, for example. mmWave (or extremely high frequency) may, for example, include the frequency range between 30 and 300 gigahertz (GHz). Radio waves in this band may, for example, have wavelengths from ten to one millimeters, giving it the name millimeter band or millimeter wave. The amount of wireless data will likely significantly increase in the coming years. Various techniques have been used in attempt to address this challenge including obtaining more spectrum, having smaller cell sizes, and using improved technologies enabling more bits/s/Hz. One element that may be used to obtain more spectrum is to move to higher frequencies, e.g., above 6 GHz. For fifth generation wireless systems (5G), an access architecture for deployment of cellular radio equipment employing mmWave radio spectrum has been proposed. Other example spectrums may also be used, such as cmWave radio spectrum (e.g., 3-30 GHz).

Article "UAVs with Reconfigurable Intelligent Surfaces: Applications, Challenges, and Opportunities" (Aly Sabri Abdalla et al, 201 OLIN LIBRARY Cornell University Ithaca, NY 14853, 8 December 2020) discloses a reconfigurable intelligent surface that contains electronically controllable and low power consuming analog processing elements. The absorption, reflection, refraction, and phase of the passive reflecting elements can be adjusted in real time to steer the incident electromagnetic signals in the desired direction.

Article "Paving the way for economically accepted and technically pronounced smart radio environment" (Salah Mostafa et al, China Institute Of Communications, vol. 19, no. 8, 17 August 2022, pages 247-266, ISSN: 1673-5447) discloses a reconfigurable intelligent surface that can be divided spatially, with time division and by frequency.

Article "Reconfigurable Intelligent Surface-Aided Wireless Power Transfer Systems: Analysis and Implementation" (Nguyen Minh Tran et al, 201 OLIN Library Cornell University Ithaca, NY 14853, 12 June 2021) discloses a reconfigurable intelligent surface that can use beam forming to provide for wireless power transfer.

### SUMMARY

In accordance with the present invention, there is provided apparatus as claimed in the accompanying claims.

### BRIEF DESCRIPTION OF THE DRAWINGS

FIG. 1 is a block diagram of a digital communications network according to an example implementation.
FIG. 2 is a diagram illustrating a hardware architecture of a reconfigurable intelligent surface (RIS), according to an example implementation.
FIG. 3 is a diagram illustrating a blocking of low-energy ambient RF signals from arriving at low energy, energy harvesting (EH) devices, according to an example implementation.
FIG. 4 is a diagram illustrating a use of RIS to overcome an obstacle, according to an example implementation.
FIG. 5 is a diagram illustrating a hardware architecture of a RIS for overcoming obstacles, according to an example implementation.
FIG. 6 is a diagram illustrating RIS groups configured at different frequency ranges, according to an example implementation.
FIG. 7 is a diagram illustrating RIS groups in energy sensing mode, according to an example implementation.
FIG. 8 is a diagram illustrating RIS groups in energy reflection mode, according to an example implementation.
FIG. 9 is a flow chart illustrating a RIS selection procedure, according to an example implementation.
FIG. 10 is a sequence diagram illustrating overall signalling for RIS operation, according to an example implementation.
FIG. 11 is a flow chart illustrating an RIS allocation check for maximum energy frequency tuning, according to an example implementation.
FIG. 12 is a flow chart for network-triggered frequency tuning, according to an example implementation.
FIG. 13 is a sequence diagram illustrating signalling for a beam refinement procedure, according to an example implementation.
FIG. 14 is a flow chart illustrating a procedure for steering electromagnetic radiation toward an EH device, according to an example implementation.
FIG. 15 is a flow chart illustrating a procedure for steering electromagnetic radiation toward an EH device, according to an example implementation.
FIG. 16 is a block diagram of a node or wireless station (e.g., base station/access point, relay node, or mobile station/user device) according to an example implementation.
FIG. 17 is a block diagram of a wireless station.

### DETAILED DESCRIPTION

The principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

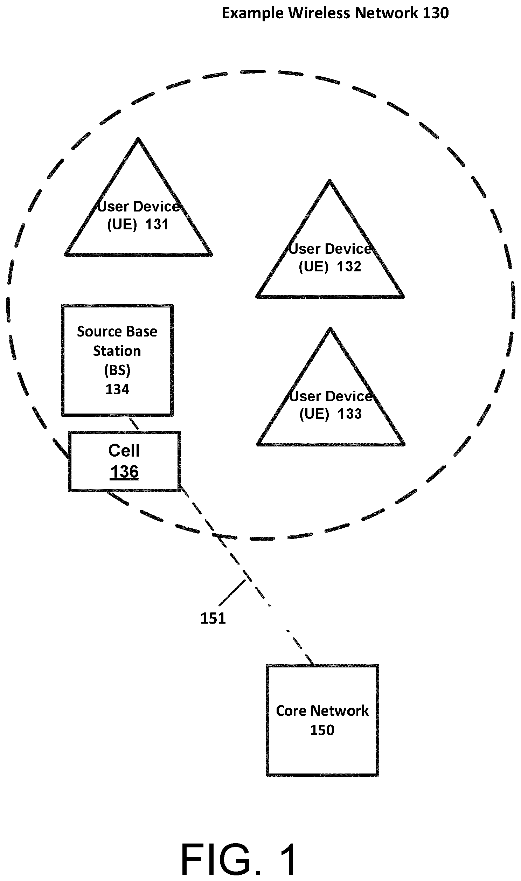

FIG. 1 is a block diagram of a digital communications system such as a wireless network 130 according to an example implementation. In the wireless network 130 of FIG. 1, user devices 131, 132, and 133, which may also be referred to as mobile stations (MSs) or user equipment (UEs), may be connected (and in communication) with a base station (BS) 134, which may also be referred to as an access point (AP), an enhanced Node B (eNB), a gNB (which may be a 5G base station) or a network node. At least part of the functionalities of an access point (AP), base station (BS) or (e)Node B (eNB) may also be carried out by any node, server or host which may be operably coupled to a transceiver, such as a remote radio head. BS (or AP) 134 provides wireless coverage within a cell 136, including the user devices 131, 132 and 133. Although only three user devices are shown as being connected or attached to BS 134, any number of user devices may be provided. BS 134 is also connected to a core network 150 via an interface 151. This is merely one simple example of a wireless network, and others may be used.

A user device (user terminal, user equipment (UE)) may refer to a portable computing device that includes wireless mobile communication devices operating with or without a subscriber identification module (SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, a vehicle, and a multimedia device, as examples. It should be appreciated that a user device may also be a nearly exclusive uplink only device, of which an example is a camera or video camera loading images or video clips to a network.

In LTE (as an example), core network 150 may be referred to as Evolved Packet Core (EPC), which may include a mobility management entity (MME) which may handle or assist with mobility/serving cell change of user devices between BSs, one or more gateways that may forward data and control signals between the BSs and packet data networks or the Internet, and other control functions or blocks.

The various example implementations may be applied to a wide variety of wireless technologies, wireless networks, such as LTE, LTE-A, 5G (New Radio, or NR), cmWave, and/or mmWave band networks, or any other wireless network or use case. LTE, 5G, cmWave and mmWave band networks are provided only as illustrative examples, and the various example implementations may be applied to any wireless technology/wireless network. The various example implementations may also be applied to a variety of different applications, services or use cases, such as, for example, ultra-reliability low latency communications (URLLC), Internet of Things (IoT), time-sensitive communications (TSC), enhanced mobile broadband (eMBB), massive machine type communications (MMTC), vehicle-to-vehicle (V2V), vehicle-to-device, etc. Each of these use cases, or types of UEs, may have its own set of requirements.

There is a demand for improved coverage (i.e. 30 m indoor and up to 100 m outdoor) and increased device density with ultra-low-cost and power consumption that is not addressed by existing solutions (i.e. RFID that has coverage up to 10 m). The use of Passive IoT devices, i.e., devices that are battery-less or devices that have energy storage capabilities but may not need manual charging over the lifetime of the device are being studied within the 3GPP framework (currently a Rel-19 study item in SA and a potential Rel-19 RAN study item). These devices are expected to have lower complexity, data rate, coverage, cost, and energy consumption than NB-IoT/eMTC devices. The use cases for passive IoT devices include identification, tracking, monitoring, sensing, logistics and supply chain management, transportation, manufacturing (factory automation), healthcare, energy, agriculture, transportation, smart cities, environment, extreme conditions, and hazardous environments in some use cases (environments where devices with batteries is not an option).

The design targets of passive IoT devices include the following:
- Improved link budget compared to existing RFID solutions,
- Frequency bands for global useability,
- Ultra-low-cost,
- No need for battery charging or replacement (enabling low maintenance long life cycle operation),
- Ultra-low-power (e.g., < 100 micro-Watts, to enable operation with backscattering or energy harvesting),
- Small device size, form-factor,
- Positioning accuracy (e.g., 3 - 5m),
- Data rate (e.g., 10 - 100 kbps),
- Energy source: Passive devices: use of backscattering techniques, Semi-passive devices: Devices operating with energy harvesting or with a very small battery (e.g., <100mAh),
- Mobile originated and mobile terminated data.

The wireless propagation environment is random and uncontrollable. Recently, reconfigurable intelligent surfaces (RISs) have been proposed as a means of having some control over them with the help of software-controlled reflections. A conventional RIS consists of a planar array of passive reflecting elements that can reflect the incoming rays with adjustable phase shifts and gains. The passive nature of the reflecting elements results in low hardware costs, low energy consumption, and the ability to naturally operate in full-duplex (FD) mode. A conventional RIS will be a low-profile auxiliary device that can be easily integrated into an existing communication network transparently, providing great flexibility and compatibility in terms of deployment.

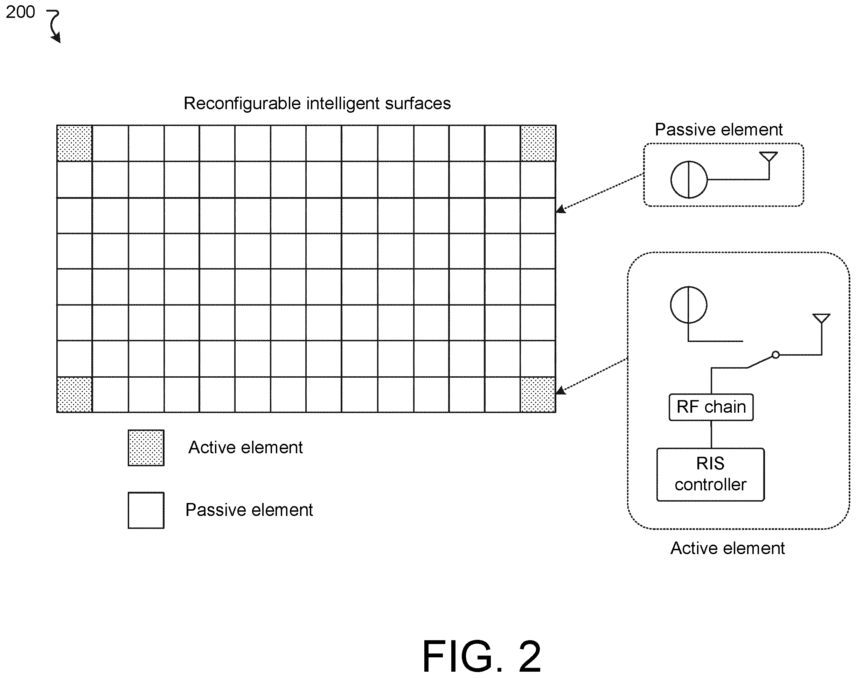

In addition to passive elements, a conventional RIS can have reconfigurable active elements, where it can be connected to an RF chain by a switch as shown in FIG. 2. These active elements can be used for different functions such as
- Communicating control messages between RIS and BS
- Channel sensing by measuring reference signals.

Passive elements will reflect the incoming signals, and phases of the passive elements can be configured to steer the incoming signals in the desired direction.

Ambient energy is composed of different signals at various frequencies. However, it is difficult to implement an RIS that supports phase adjustment for incoming signals at different frequency bands simultaneously. There is a focus on frequency reconfigurable antennas in the current state-of-the-art research. A similar approach can be used to facilitate RIS to support phase adjustment at different frequencies, while a specific frequency can be set for a group of elements at a given time.

There can be different RF signals that can power RF energy harvesting devices (ex. TV, radio, cellular, and Wi-Fi signals). However, energy availability is random and can be interrupted due to different factors as given below.
- Blockage,
- Mobility in environment,
- Weather,
- Device relocation.

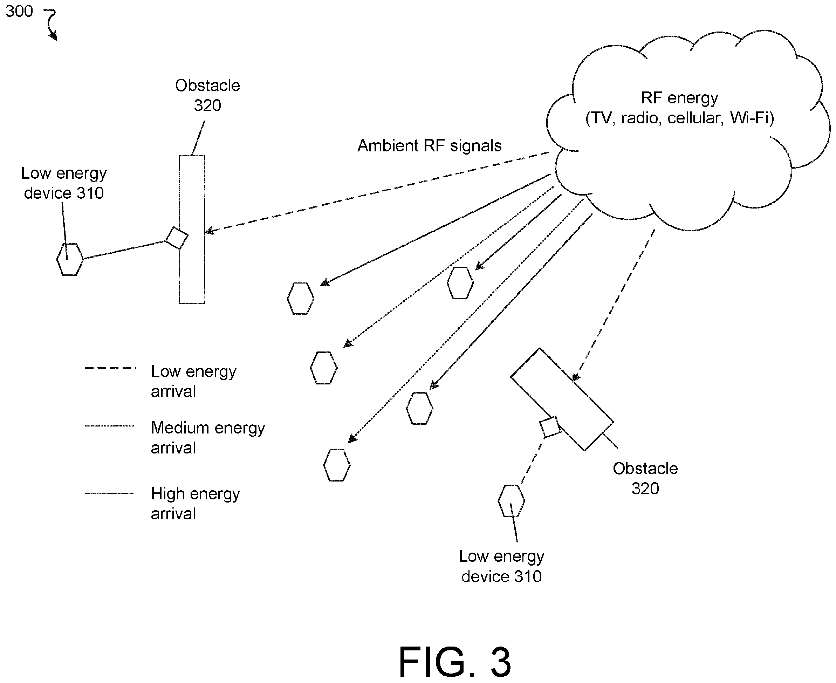

A blockage scenario is illustrated in FIG. 3, where two devices are blocked by an obstacle. As a result, the energy arrival at these devices is low. On the other hand, multiple dedicated power sources can be used to cover all devices, but they are costly and can have the same issues.

A complication is the fact that ambient energy consists of signals of different frequencies, and it is important to filter frequencies that an RIS can reflect and cause more energy harvesting at the passive IoT device.

In contrast to the above-described conventional RIS which may have problems routing RF energy to EH devices in the presence of obstacles, an improved RIS has reconfigurable EH elements that are configured to 1) measure electromagnetic radiation levels over a set of frequency ranges and 2) report the energy levels to a gNB or BS to which the RIS communicates. The gNB may then determine whether to use the RIS to steer energy toward an energy harvesting device based on the report. For example, if the energy report indicates that the energy levels at the RIS in a frequency range of interest to an EH device are sufficiently high, the gNB may select that RIS if the RIS has capacity to allocate passive EH elements at the frequency range of interest. If the EH elements report low energy levels, the gNB may select another RIS to steer energy to that EH device.

Advantageously, the improved RIS is able to steer energy to an EH device more robustly, e.g., in the presence of obstacles. The new signaling between the gNB and RIS allows the gNB to decide whether the RIS has the ability to steer energy toward an EH device in the network - and select another RIS if that is not the case. The improved RIS can also form groups of passive EH elements that steer energy within a particular frequency range (e.g., a mean frequency and a bandwidth about the mean frequency) toward an EH device using a phase shift. Moreover, the improved RIS can perform a beam refinement procedure that can select a beam along which an appropriate amount of energy in the frequency range of interest can be transmitted to the EH device.

Accordingly, a solution to the problem of energy harvesting in the presence of obstacles is proposed based on the RIS with reconfigurable EH elements to enable measurement of energy arriving at different frequencies and subsequently energy steering towards EH devices at a desired frequency based on the measurements. In addition to active and passive elements at the RIS, a concept of reconfigurable energy harvesting elements is proposed that have energy harvesting circuitry connected to antenna elements, which are used to do the following.
- Measure the energy arrival at RIS i.e. incoming energy at different frequency ranges (e.g. TV tower, BS, cellular, WiFi, etc.).
- Report energy arrival measurements to the gNB/base station (BS).

In addition, two different phases or modes of RIS are proposed, namely energy sensing and energy steering mode. In the energy sensing mode, measurements are taken from EH elements to estimate energy arrival at the RIS. In the energy steering mode, incoming energy is steered toward the EH devices. The RIS elements are divided into several groups and each group will serve a user (EH device/user equipment (UE)) with a specific priority corresponding to the energy arrival at that group.

As mentioned above, the RIS provides an energy arrival at RIS report to the BS, which will be used by the BS to select an RIS with which to link the low energy EH device based on the EH device's frequency (or frequency range) of operation.

An overall example mode of operation for a RIS is as follows.
1. Initially, the EH device and RIS are connected to the BS. (Even if energy received from BS at the device is low due to a blockage or any other reason, the EH device can still harvest energy from other sources and communicate with BS using more power.) The RIS is connected to the BS for control signals.
2. EH elements of the RIS measure the energy arrival level at the RIS, i.e. incoming energy at different frequency ranges (e.g. TV tower, BS, WiFi, etc.), and report the measurements to the BS.
3. At some point, the EH device has a low-energy arrival.
4. If a cumulative energy arrival at the EH device is low during a continuous period (TP1), the UE sends a message by means of either periodic reporting or trigger-based energy level reporting to the BS.
5. The BS will request the RIS to configure energy steering towards the EH device at a previously determined frequency or frequency range (e.g., based on measurements reported by the RIS).
6. The RIS will reconfigure its phases to allow energy steering at the indicated frequency towards the EH device through the reflected path.
7. The EH device periodically measures the arriving energy (reflected by the RIS) and sends a low energy arrival at the device message to the BS if the energy falls below a threshold.
8. If a low energy arrival indication is received or if any energy report is not received at all at gNB a counter is incremented (low energy retry counter). If counter value < L (low energy retry threshold), go to step 6, else, the BS may configure another RIS to steer energy to the device.
9. Finally, gNB will signal RIS to release resources allocated for UE, and the RIS releases the allocated passive element group.

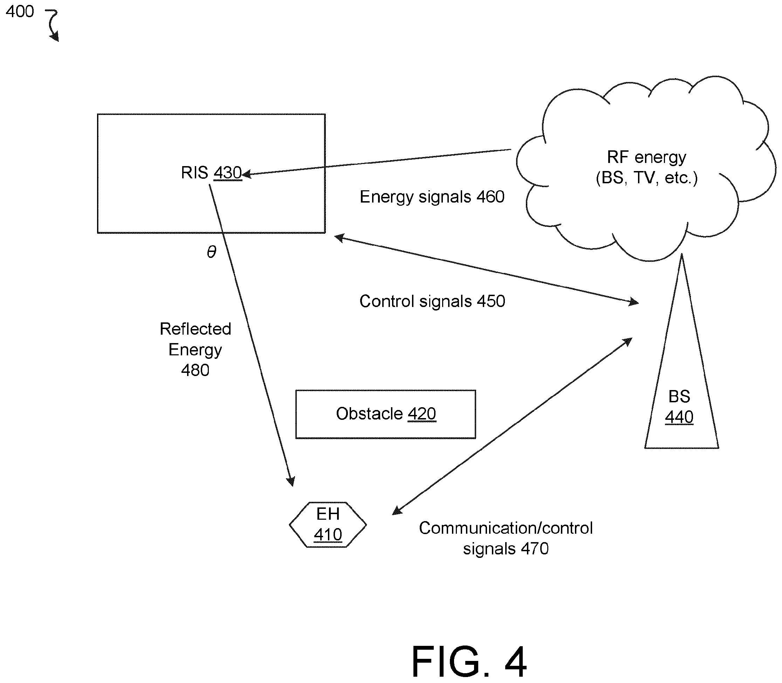

FIG. 4 is a diagram illustrating a use of an RIS 430 to overcome an obstacle 420 in a wireless network 400. In FIG. 4, a BS 440 exchanges control signals 450 with the RIS 430 to provide information about the EH device 410, e.g., location, frequency/frequency range. The RIS 430 then configured EH elements in the RIS 430 to steer RF energy signals 460 into reflected energy 480 (e.g., along particular beams) toward the EH device 410. The EH device 410 in turn exchanges communication/control signals 470 with the BS 440 regarding its energy levels and whether the BS 440 should seek another RIS to steer energy toward the EH device 410.

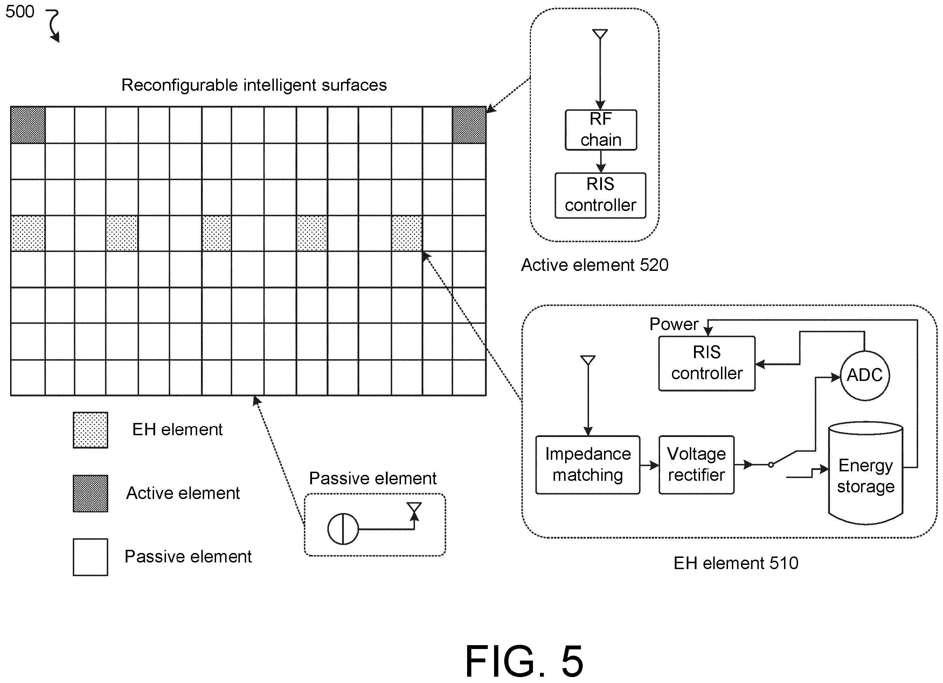

FIG. 5 is a diagram illustrating a hardware architecture of a RIS 500 for overcoming obstacles, according to an example implementation. As shown in FIG. 5, the RIS 500 has different types of elements: EH elements 510, active elements 520, and passive elements. The reconfigurable EH elements 510 have energy harvesting circuitry connected to antenna elements, which are used to do the following.
- Measure the energy arrival at the RIS 500, i.e., incoming energy from various energy sources (e.g. TV tower, BS, cellular, WiFi, etc.);
- Forward the incoming energy level information to the active elements 520 to inform the BS (not pictured).

Additionally, the RIS has the ability to reconfigure the operating frequency range of different elements, thus enabling energy sensing and energy steering at different frequencies.
- EH elements can be used to measure the incoming energy at different frequency ranges.
- The frequency range of passive elements is adjusted to steer RF energy targeted at that range.

There are two methods to assign a frequency range for different groups:
- Frequency tuning for maximum energy check (i.e., energy is sensed at multiple frequency ranges and the frequency range with maximum energy is selected);
- Network triggered tuning (i.e., network requests a frequency range based on device requirements).

There can be different example cases based on the implementation. The simplest case would be to utilize different frequency panels while each panel having a fixed frequency, where frequency tuning will not be needed. Another example case is an implementation, where the frequency of the panels is reconfigured based on the frequency tuning method.

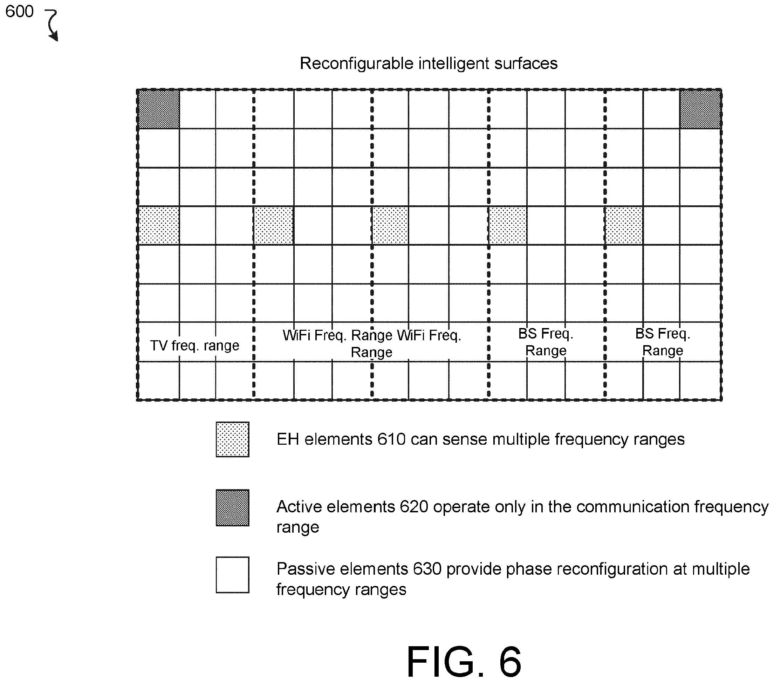

FIG. 6 is a diagram illustrating RIS groups of an RIS 600 allocated at different frequency ranges. As shown in FIG. 6, the RIS 600 is allocated into five groups, one of which is configured for a TV frequency range, two of which are configured for a WiFi frequency range, and two of which are configured for a BS frequency range. Each EH element 610 is associated with a frequency range, although in some implementations some groups have more than one EH element 610. The active elements 620 are shown in FIG. 6 in the corners of the RIS and operate in the communication frequency range as they are in communication with the BS. The passive elements 630 provide phase configuration for steering electromagnetic radiation for multiple frequency ranges.

The RIS operates in two modes: an energy sensing mode and an energy steering mode.

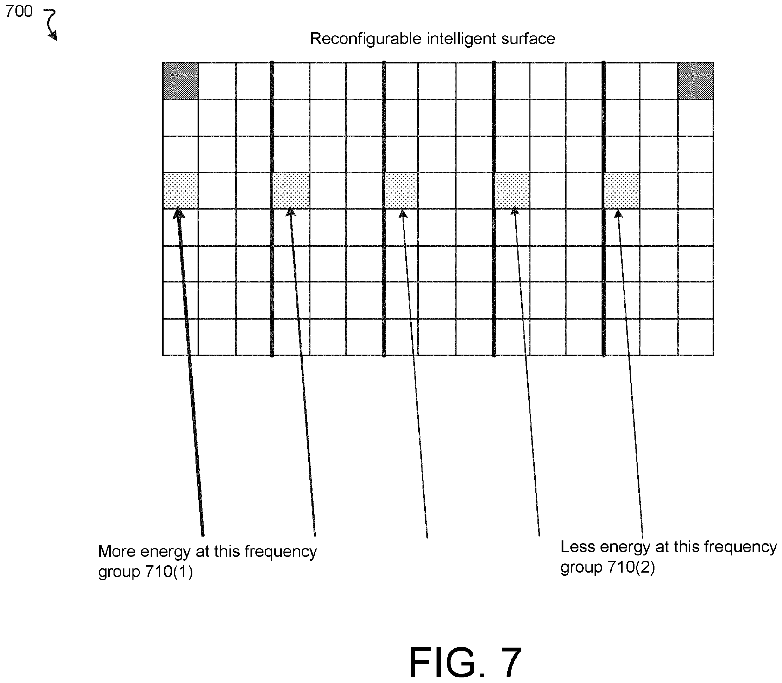

FIG. 7 is a diagram illustrating RIS groups of an RIS 700 in energy sensing mode. In the energy sensing mode, reconfigurable EH elements are activated to measure incoming energy at different operating frequencies or frequency ranges, e.g., groups 710(1) and 710(2). Each EH element will get a different reading based on the energy arriving at them, as shown in FIG. 7. When they are not active, the EH elements will harvest and store energy, which is used to power the RIS 700.

In the case of different frequency panels 710(1) and 710(2), while each panel has a fixed frequency, a fixed measurement gap (i.e. configured by the network) can be used to enable incoming energy measurements. But in case the frequency of the panels is reconfigurable, the RIS 700 requires a separate measurement gap for each frequency (i.e. configured by the network) to identify and measure each frequency's incoming energy. During these measurements, the EH elements of the RIS 700 will stop energy harvesting and measure only the required frequency.

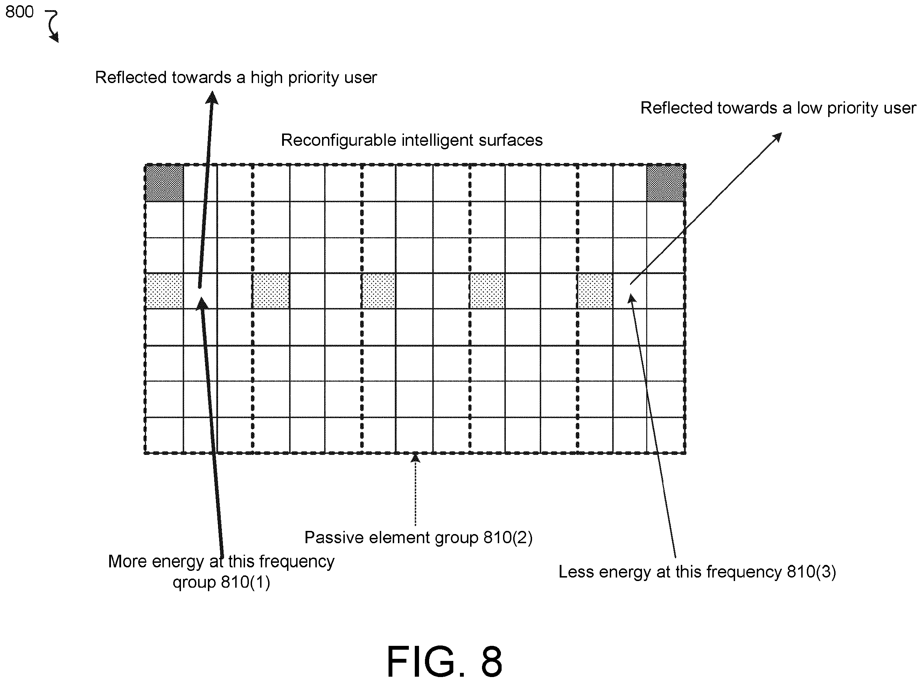

FIG. 8 is a diagram illustrating RIS groups of an RIS 800 in energy steering mode. In the energy steering mode, incoming energy at the RIS 800 will be reflected toward users. The RIS 800 is divided into several groups of elements, e.g., 810(1), 810(2), 810(3). Each group has a reconfigurable EH element as shown in FIG. 8. Each group will be tuned to a certain frequency, and that group will be associated with a certain level of user priority based on the energy arrival. For example, the network indicates the priority of the UEs to RIS and then RIS assigns high-priority UEs to larger incoming energy group 810(1) whereas low-priority UEs with smaller incoming energy group 810(3). Phases of different groups are optimized individually for the associated users.

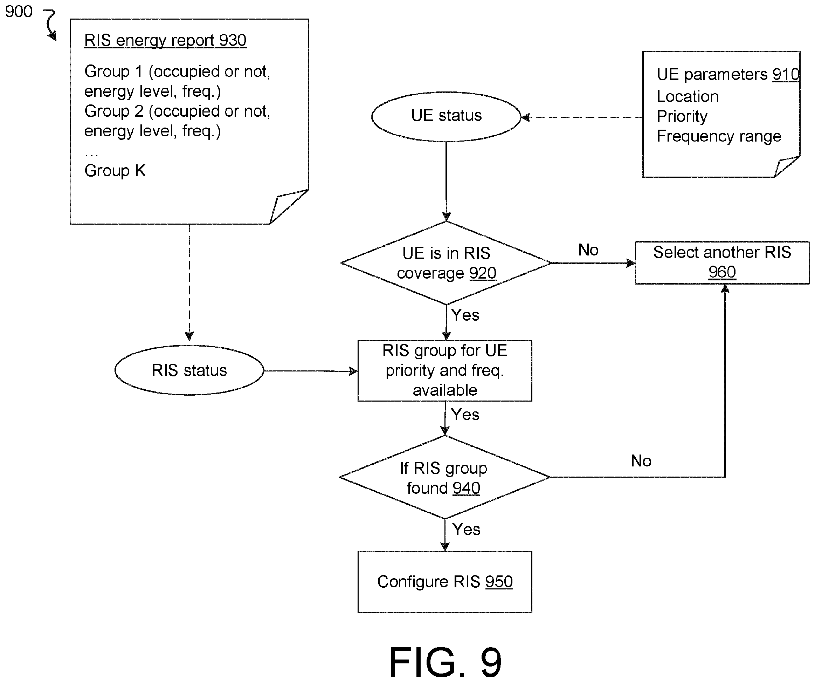

FIG. 9 is a flow chart illustrating a RIS selection procedure 900. The RIS selection procedure 900 depends on the parameters reported by both UE and RIS. RIS energy reporting includes the occupied status, energy arrival, and frequency for all the groups. This will be reported by RIS to the gNB/BS if there is a change of energy status or once a preconfigured period.

At 910, the UE (EH device) status is defined in terms of UE parameters, including location, priority, and frequency range.

At 920 and 930, the BS checks as to whether the UE is in RIS coverage; if not, the BS selects another RIS.

At 940, the BS checks as to whether the RIS has an unoccupied element group with sufficient energy arrival for UE priority and frequency; if not, the BS selects another RIS.

At 950, if an RIS element group is found, then the BS will configure the RIS to steer energy to the UE at the corresponding frequency.

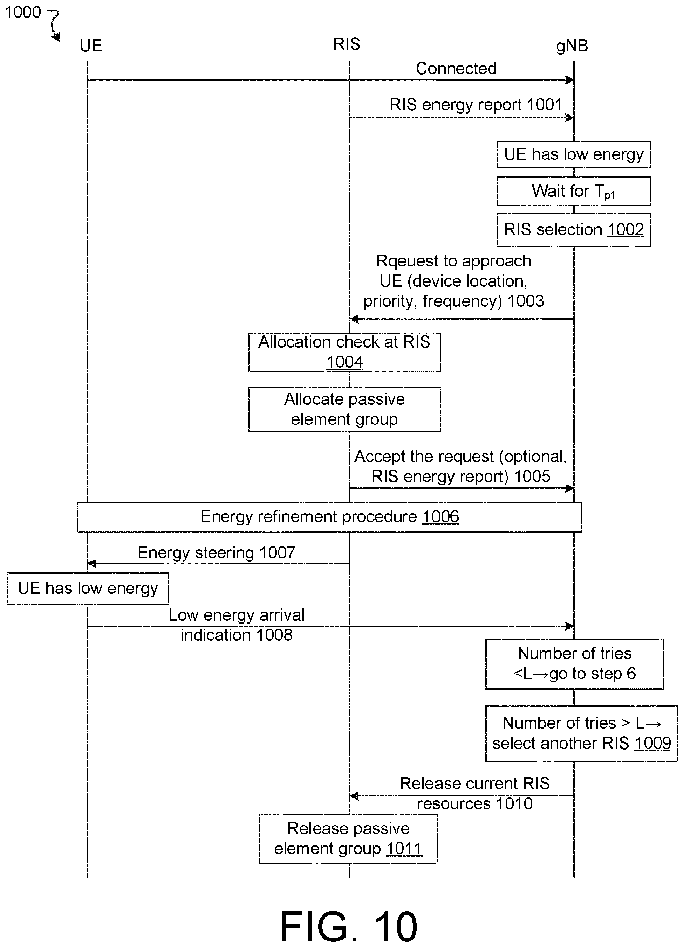

FIG. 10 is a sequence diagram illustrating overall signalling for RIS operation 1000.

At 1001, the RIS performs measurements and reports the energy arrival to gNB per group of elements if there is a change of energy status or, in some implementations, once per preconfigured period.

At 1002, if the EH device/UE has low energy continuously for a specified period of TP₁ (which we assumed to be known at BS by means of periodic or trigger-based energy level reporting), a RIS will be selected and activated based on the RIS energy arrival report at the BS.

At 1003, the BS transmits a request to the RIS to approach the UE; in some implementations, the request includes UE location, priority, and frequency or frequency range.

At 1004, in the allocation check at RIS, the reconfigurable EH elements check the energy arrival at the reported frequency and determine if a passive element group can be allocated at that frequency. The allocation check follows one of two procedures based on the method of frequency tuning (i.e., maximum energy-based or network triggered). If success, then the procedure goes to 1005, otherwise the request is rejected.

At 1005, the RIS accepts the request. In some implementations, the RIS reports its energy arrival to the BS if there is a change in its energy status.

At 1006, the BS transmits a message to the RIS to begin the beam refinement procedure. Here, the beam along which the electromagnetic radiation is transmitted to the UE is selected; the UE will report the energy arrival along that beam to the BS. This beam refinement procedure is repeated until a desired energy status is achieved. If the beam refinement procedure fails to reach the target energy, the RIS will reject the request, and the BS will try another option, i.e. another RIS.

At 1007, the RIS steers electromagnetic radiation energy toward the UE.

At 1008, the UE periodically measures the energy arrival and sends a low energy arrival indication to the BS if the energy falls below a threshold.

At 1009, the BS increments a counter if a low energy arrival indication is received or if any energy report is not received at all. If the counter value is greater than a threshold L, then the BS may reconfigure another RIS for steering energy to the UE.

At 1010, the BS transmits a message to the RIS to release resources allocated for the UE.

At 1011, the RIS releases the allocated passive EH element group.

As stated above, the RIS allocation check at 1004 (FIG. 10) follows one of two procedures based on the method of frequency tuning (i.e., maximum energy-based or network triggered).

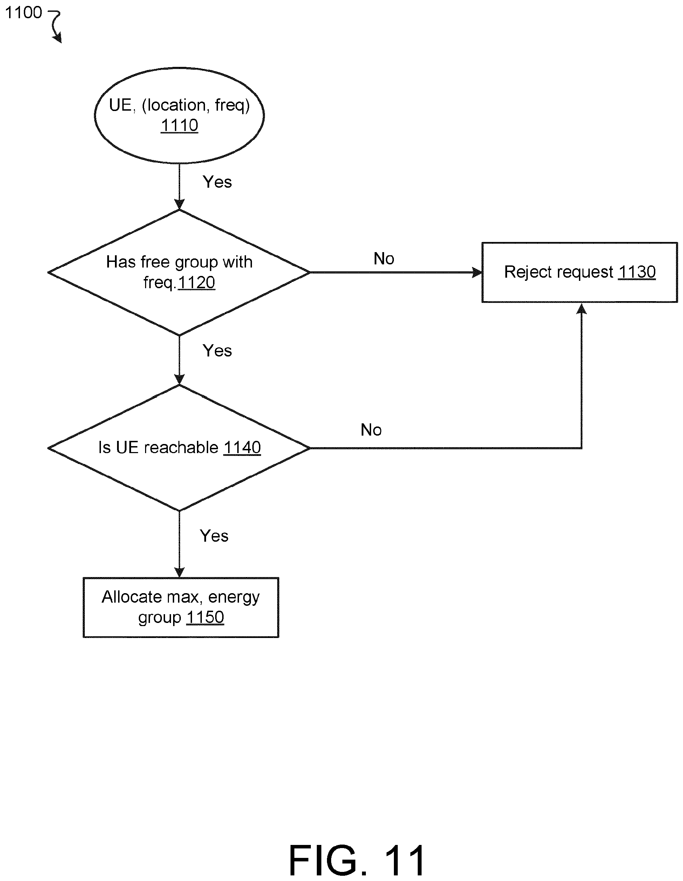

FIG. 11 is a flow chart illustrating an RIS allocation check for maximum energy-based frequency tuning procedure 1100. In this case, free RIS groups are tuned for the frequency corresponding to maximum energy arrival. When RIS receives a request to approach a certain UE, it will follow the maximum energy-based frequency tuning procedure 1100 as follows.

At 1110, the RIS receives a request from the BS, the request including location, priority, frequency/frequency range of a UE in the wireless network.

At 1120, the RIS checks whether there are free groups of passive EH elements capable of reflecting the electromagnetic radiation at the frequency or within the frequency range. If not, the RIS rejects the request 1130.

At 1140, the RIS checks whether the UE is reachable, i.e., whether the UE is within RIS coverage. If not, the RIS rejects the request 1130.

At 1150, the group of passive EH elements with maximum energy arrival of all free groups is allocated.

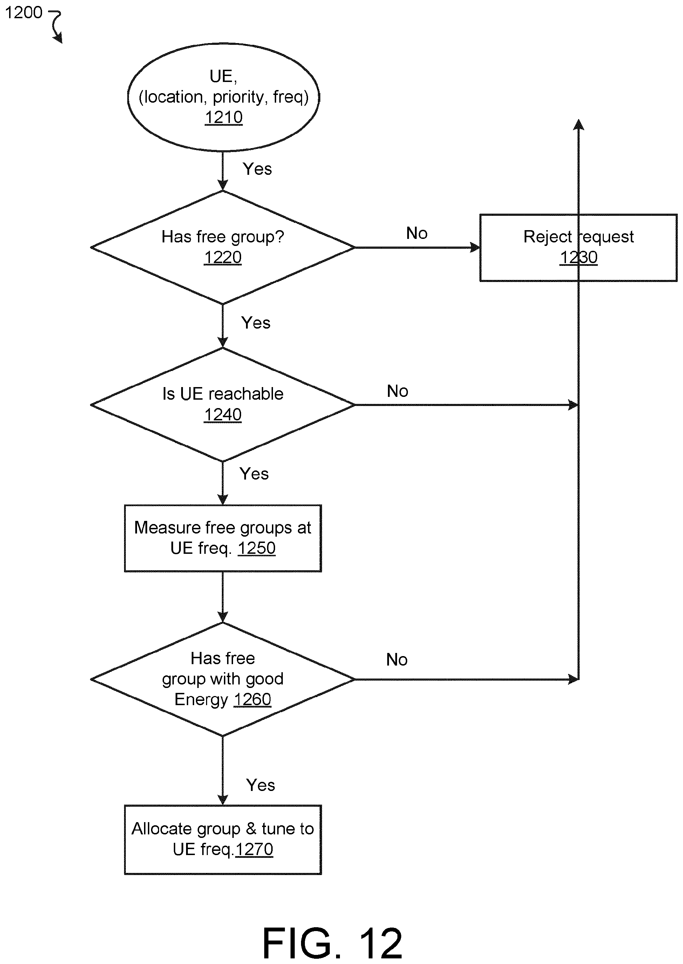

FIG. 12 is a flow chart for a network-triggered frequency tuning procedure 1200.

At 1210, the RIS receives a request from the BS, the request including location, priority, frequency/frequency range of a UE in the wireless network.

At 1220, the RIS checks whether there are free groups of passive EH elements capable of reflecting the electromagnetic radiation at the frequency or within the frequency range. If not, the RIS rejects the request 1230.

At 1240, the RIS checks whether the UE is reachable, i.e., whether the UE is within RIS coverage. If not, the RIS rejects the request 1230.

At 1250, the RIS measures the energy at the free groups of passive EH elements of the RIS at the UE frequency/frequency range.

At 1260, the RIS checks whether there is a free group of passive EH elements of the RIS with a sufficient energy level at the UE frequency/frequency range. If not, the RIS rejects the request 1230.

At 1270, the network-triggered group of passive EH elements is allocated.

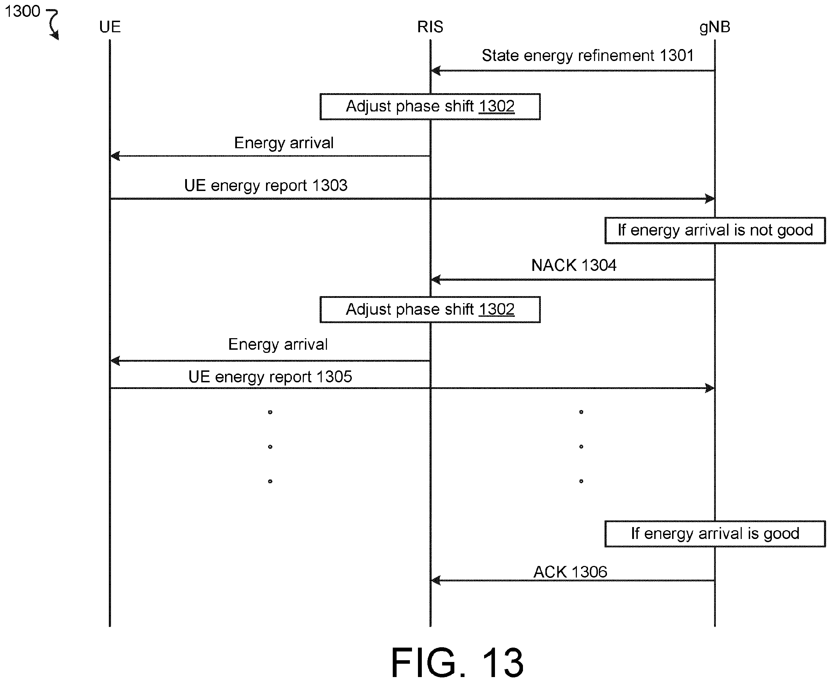

FIG. 13 is a sequence diagram illustrating signalling for a beam refinement procedure 1300. It is assumed that the RIS has a codebook of a plurality of N beams. Based on the location of the UE (reported by BS), the RIS can select M (< N) of the plurality of beams. The beam refinement procedure can be used to further select the best beam of the plurality.

At 1310, the BS transmits a message to the RIS, the message indicating that the RIS is to begin the beam refinement procedure 1300.

At 1320, the RIS, in response, begins the beam refinement procedure 1300 by selecting a first beam of the plurality of beams and adjusting phase shifts corresponding to that beam.

At 1330, the UE receives energy from that selected beam and reports an energy level to the BS.

At 1340, if the energy level is insufficient, the BS sends a NACK to the RIS.

At 1350, in response to the NACK, the RIS selects another beam of the plurality of beams and adjusts phase shifts corresponding to that beam.

At 1360, if the energy level is sufficient, the BS sends an ACK to the RIS and the beam refinement procedure 1300 is terminated.

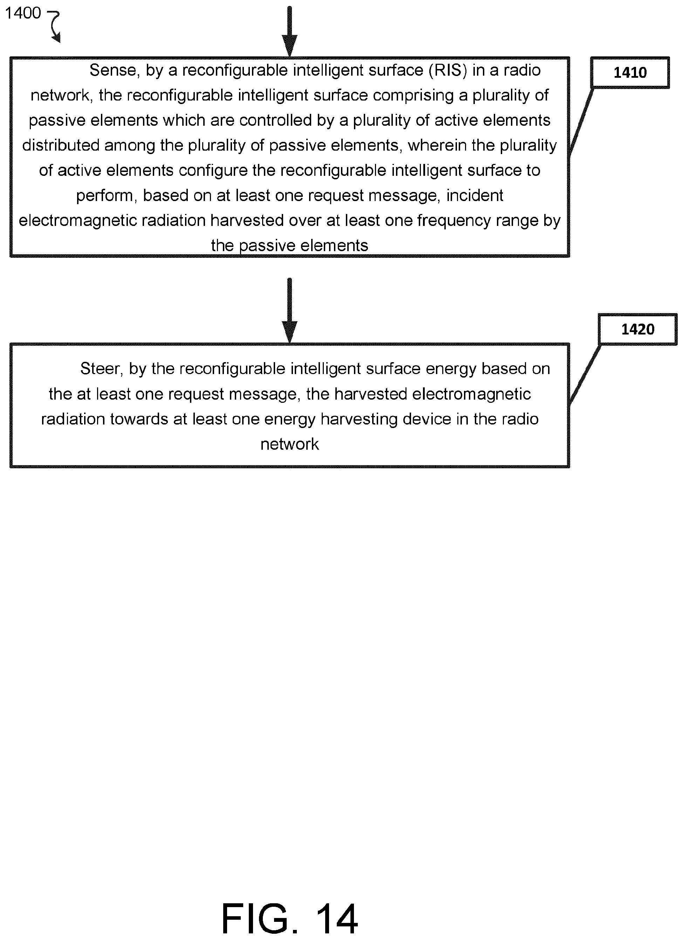

FIG. 14 is a flow chart illustrating a process 1400 Operation 1410 includes sensing or measuring, by a reconfigurable intelligent surface (RIS) in a radio network, the reconfigurable intelligent surface includes a plurality of passive elements which are controlled by a plurality of active elements distributed among the plurality of passive elements, wherein the plurality of active elements configure the reconfigurable intelligent surface to perform, based on at least one request message, incident electromagnetic radiation harvested over at least one frequency range by the passive elements. Operation 1420 includes steering, by the reconfigurable intelligent surface energy based on the at least one request message, the harvested electromagnetic radiation towards at least one energy harvesting device in the radio network.

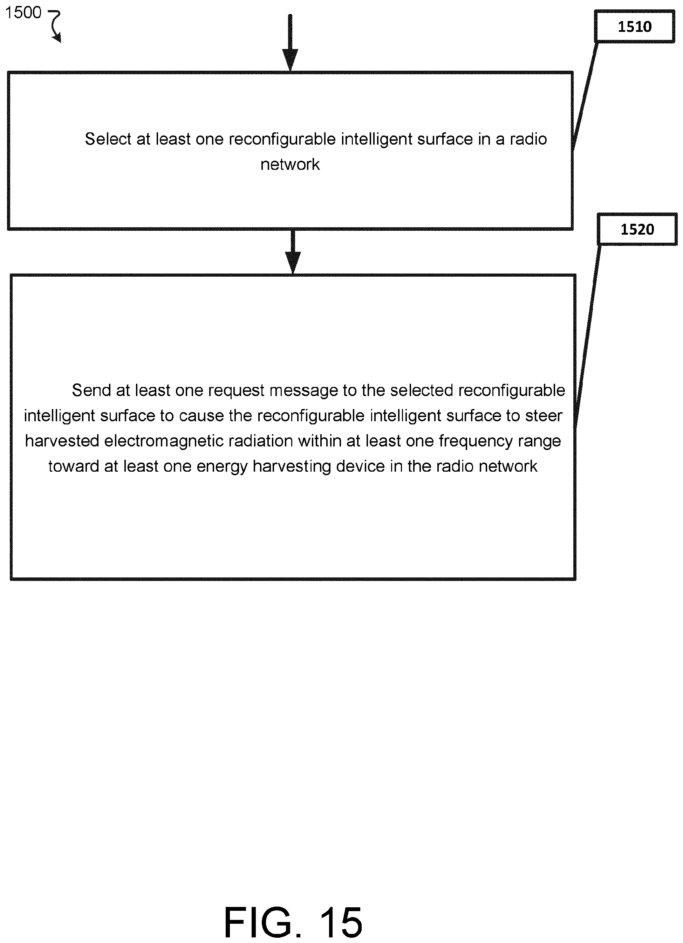

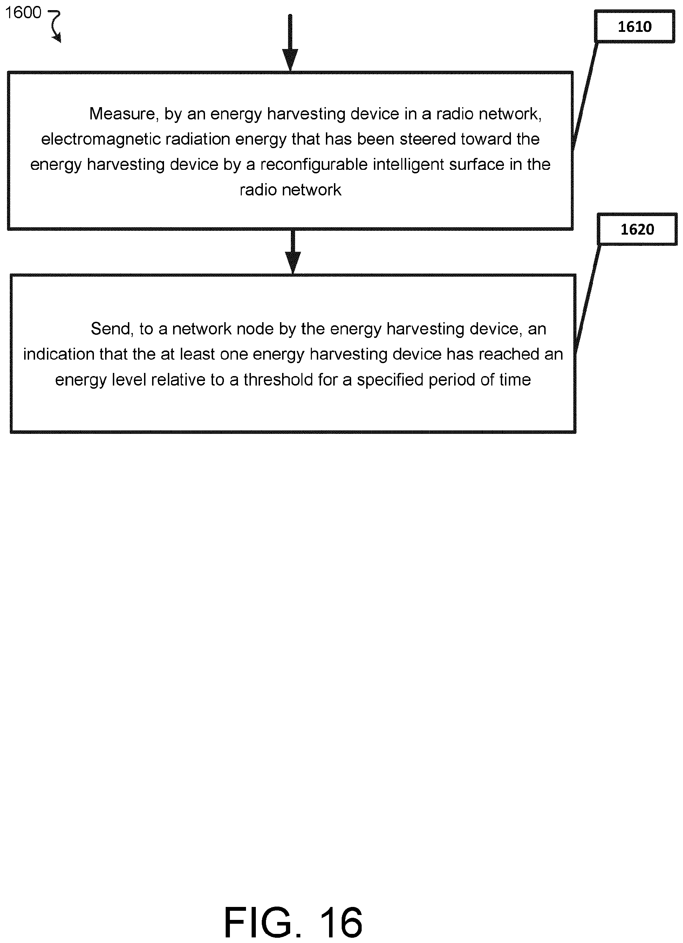

FIG. 15 is a flow chart illustrating a process 1500. Operation 1510 includes selecting at least one reconfigurable intelligent surface in a radio network. Operation 1520 includes sending at least one request message to the selected reconfigurable intelligent surface to cause the reconfigurable intelligent surface to steer harvested electromagnetic radiation within at least one frequency range toward at least one energy harvesting device in the radio network. FIG. 16 is a flow chart illustrating a process 1600. Operation 1610 includes measuring, by an energy harvesting device in a radio network, electromagnetic radiation energy that has been steered toward the energy harvesting device by a reconfigurable intelligent surface in the radio network. Operation 1620 includes sending, to a network node by the energy harvesting device, an indication that the at least one energy harvesting device has reached an energy level relative to a threshold for a specified period of time.

### List of example abbreviations:

| | |
|---|---|
| ACK | Acknowledgement |
| EH | Energy harvesting |
| KPI | Key performance indicator |
| NACK | Negative Acknowledgement |
| NW | Network |
| PIoT | Passive IoT |
| RedCap | Reduced capacity |
| RF | Radio Frequency |
| RIS | Reconfigurable Intelligent Surface |
| UE | User Equipment |
| ACK | Acknowledgement |
| EH | Energy harvesting |
| KPI | Key performance indicator |

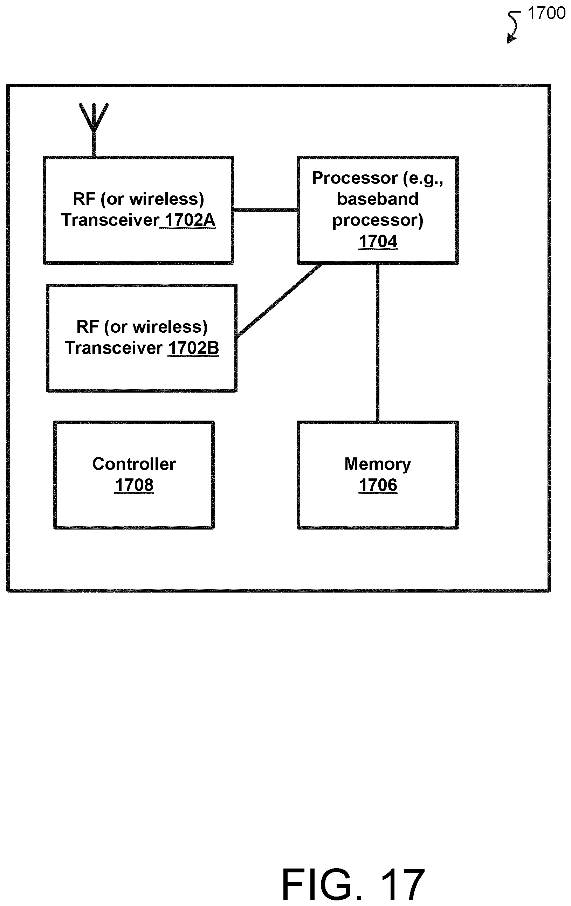

FIG. 17 is a block diagram of a wireless station (e.g., AP, BS, e/gNB, NB-IoT UE, UE or user device) 1700 according to an example implementation. The wireless station 1700 may include, for example, one or multiple RF (radio frequency) or wireless transceivers 1702A, 1702B, where each wireless transceiver includes a transmitter to transmit signals (or data) and a receiver to receive signals (or data). The wireless station also includes a processor or control unit/entity (controller) 1704 to execute instructions or software and control transmission and reception of signals, and a memory 1706 to store data and/or instructions.

Processor 1704 may also make decisions or determinations, generate slots, subframes, packets or messages for transmission, decode received slots, subframes, packets or messages for further processing, and other tasks or functions described herein. Processor 1704, which may be a baseband processor, for example, may generate messages, packets, frames or other signals for transmission via wireless transceiver 1702 (1702A or1702B). Processor 1704 may control transmission of signals or messages over a wireless network, and may control the reception of signals or messages, etc., via a wireless network (e.g., after being down-converted by wireless transceiver 1702, for example). Processor 1704 may be programmable and capable of executing software or other instructions stored in memory or on other computer media to perform the various tasks and functions described above, such as one or more of the tasks or methods described above. Processor 1704 may be (or may include), for example, hardware, programmable logic, a programmable processor that executes software or firmware, and/or any combination of these. Using other terminology, processor 1704 and transceiver 1702 (1702A or 1702B) together may be considered as a wireless transmitter/receiver system, for example.

In addition, referring to FIG. 17, a controller (or processor) 1708 may execute software and instructions, and may provide overall control for the station 1700, and may provide control for other systems not shown in FIG. 17 such as controlling input/output devices (e.g., display, keypad), and/or may execute software for one or more applications that may be provided on wireless station 1700, such as, for example, an email program, audio/video applications, a word processor, a Voice over IP application, or other application or software.

In addition, a storage medium may be provided that includes stored instructions, which when executed by a controller or processor may result in the processor 604, or other controller or processor, performing one or more of the functions or tasks described above.

According to another example implementation, RF or wireless transceiver(s) 1702A/1702B may receive signals or data and/or transmit or send signals or data. Processor 1704 (and possibly transceivers 1702A/1702B) may control the RF or wireless transceiver 1702A or 1702B to receive, send, broadcast or transmit signals or data.

The embodiments are not, however, restricted to the system that is given as an example, but a person skilled in the art may apply the solution to other communication systems. Another example of a suitable communications system is the 5G concept. It is assumed that network architecture in 5G will be quite similar to that of the LTE-advanced. 5G uses multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

It should be appreciated that future networks will most probably utilise network functions virtualization (NFV) which is a network architecture concept that proposes virtualizing network node functions into "building blocks" or entities that may be operationally connected or linked together to provide services. A virtualized network function (VNF) may include one or more virtual machines running computer program codes using standard or general type servers instead of customized hardware. Cloud computing or data storage may also be utilized. In radio communications this may mean node operations may be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

Implementations of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine-readable storage device or in a propagated signal, for execution by, or to control the operation of, a data processing apparatus, e.g., a programmable processor, a computer, or multiple computers. Implementations may also be provided on a computer readable medium or computer readable storage medium, which may be a non-transitory medium. Implementations of the various techniques may also include implementations provided via transitory signals or media, and/or programs and/or software implementations that are downloadable via the Internet or other network(s), either wired networks and/or wireless networks. In addition, implementations may be provided via machine type communications (MTC), and also via an Internet of Things (IoT).

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers.

Furthermore, implementations of the various techniques described herein may use a cyber-physical system (CPS) (a system of collaborating computational elements controlling physical entities). CPS may enable the implementation and exploitation of massive amounts of interconnected ICT devices (sensors, actuators, processors microcontrollers,...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various implementations of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, implementations may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. The invention is thus only defined by the appended claims.

## Claims

1. An apparatus, comprising:
a reconfigurable intelligent surface, RIS (430), in a radio network (400), the reconfigurable intelligent surface comprising a plurality of passive elements which are controlled by a plurality of active elements distributed among the plurality of passive elements, wherein the plurality of active elements configure the reconfigurable intelligent surface to perform, based on a request message from a network node (440) in the radio network:
sense incident electromagnetic radiation harvested over at least one frequency range by the passive elements; and
steer energy of the harvested electromagnetic radiation towards at least one energy harvesting device in the radio network, **characterised by** the at least one of the plurality of active elements comprising:
at least one processor; and
at least one memory storing instructions that, when executed by the at least one processor, cause the reconfigurable intelligent surface to perform, based on the message, the sensing of the harvested electromagnetic radiation energy,
wherein the reconfigurable intelligent surface is further caused to perform:
measuring, by the sensors or the energy harvesting circuitry, a respective energy level of the harvested electromagnetic radiation over the at least one frequency range; and
sending, by the communication interface, to a network node in the radio network, a first report message indicating the respective energy level of the harvested electromagnetic radiation measured over the at least one frequency range.

2. The apparatus according to claim 1, wherein the steering of the harvested electromagnetic radiation energy towards the at least one energy harvesting device in a radio network based on the at least one request message, comprises the reconfigurable intelligent surface caused to:
steer, by selecting at least one best beam, and transmit the harvested energy over the at least one frequency range toward the at least one energy harvesting device in the radio network, in response to the at least one request message and when the measured energy level of the harvested electromagnetic radiation over the at least one frequency range is greater than a threshold.

3. The apparatus according to claim 2, wherein the reconfigurable intelligent surface is further caused to:
in response to receiving the at least one request message, perform an allocation check operation to determine whether there is a group of passive elements of the reconfigurable intelligent surface that is available to be used to steer the harvested energy within the at least one frequency range toward the at least one energy harvesting device.

4. The apparatus as in claim 3, wherein the reconfigurable intelligent surface in response to determining that there is a group of passive elements of the reconfigurable intelligent surface available to be used to steer the harvested energy over the at least one frequency range toward the at least one energy harvesting device, is further caused to:
allocate the group of passive elements of the reconfigurable intelligent surface for steering the harvested energy within the at least one frequency range toward the at least one energy harvesting device;
adjust phase shifts of the passive elements of the group of passive elements of the reconfigurable intelligent surface to produce a first beam of a plurality of beams of harvested energy for steering the electromagnetic radiation; and
send a second report message to the network node indicating that the request message is accepted.

5. The apparatus according to claim 4, wherein the second report message further indicates a change in the respective level of energy of the harvested energy over the at least one frequency range.

6. The apparatus according to claim 1, wherein the at least one memory and the instructions are further configured to cause the apparatus at least to:
receive, from the network node, a third message indicating that the reconfigurable intelligent surface release resources allocated for the at least one energy harvesting device.

7. The apparatus according to claim 1, wherein the reconfigurable intelligent surface is further caused to:
perform a beam refinement operation to determine at least one beam of a plurality of beams for steering the harvested energy over the at least one frequency range toward at least one energy harvesting device.

8. The apparatus according to claim 7, wherein the reconfigurable intelligent surface is further caused to:
adjust phase shifts of a group of passive elements of the reconfigurable intelligent surface to form the at least one beam of the plurality of beams of the electromagnetic radiation and enable steering the harvested energy over the at least one frequency range toward the at least one energy harvesting device.

9. The apparatus according to claim 8, wherein the at least one beam of the plurality of beams of electromagnetic radiation is formed in response to receiving a second message from the network node indicating that the harvested energy received by the at least one energy harvesting device from the at least one beam is not sufficient.

10. The apparatus according to claim 8, wherein the apparatus is at least caused to:
send, to the network node, a first indication message that the respective energy level of the electromagnetic radiation received from the first beam is less than a level threshold required by the at least one energy harvesting device; and
receive, from the network node, a second indication message that the respective energy level of the electromagnetic radiation received from the first beam being insufficient and more energy from a second beam should be steered toward the at least one energy harvesting device.

11. The apparatus according to claim 8, wherein the apparatus is at least caused to:
receive, from the network node, a release message indicating that at least one active element of the first reconfigurable intelligent surface to release resources allocated for the energy harvesting device.

12. The apparatus according to claim 1, wherein the passive elements on the reconfigurable intelligent surface are partitioned into multiple regions, each region configured to be controlled by at least one respective active element to sense, harvest and steer the electromagnetic radiation energy over a respective frequency range towards the at least one energy harvesting device.

## Patentansprüche

1. Vorrichtung, umfassend:
eine rekonfigurierbare intelligente Oberfläche, RIS (430), in einem Funknetzwerk (400), wobei die rekonfigurierbare intelligente Oberfläche eine Vielzahl von passiven Elementen umfasst, die durch eine Vielzahl von aktiven Elementen gesteuert werden, die unter der Vielzahl von passiven Elementen verteilt sind, wobei die Vielzahl von aktiven Elementen die rekonfigurierbare intelligente Oberfläche konfigurieren, um auf der Grundlage einer Anforderungsnachricht von einem Netzwerkknoten (440) in dem Funknetzwerk Folgendes durchzuführen:
Erfassen einer einfallenden elektromagnetischen Strahlung, die über mindestens einen Frequenzbereich durch die passiven Elemente gewonnen wird; und
Lenken von Energie der gewonnenen elektromagnetischen Strahlung zu mindestens einer Energiegewinnungsvorrichtung in dem Funknetzwerk,
**dadurch gekennzeichnet, dass** das mindestens eine der Vielzahl von aktiven Elementen umfasst:
mindestens einen Prozessor; und
mindestens einen Speicher, der Anweisungen speichert, die, wenn sie durch den mindestens einen Prozessor ausgeführt werden, die rekonfigurierbare intelligente Oberfläche veranlassen, auf der Grundlage der Nachricht das Erfassen der gewonnenen elektromagnetischen Strahlungsenergie durchzuführen,
wobei die rekonfigurierbare intelligente Oberfläche ferner veranlasst wird, Folgendes durchzuführen:
Messen, durch die Sensoren oder die Energiegewinnungsschaltung, eines jeweiligen Energieniveaus der gewonnenen elektromagnetischen Strahlung über den mindestens einen Frequenzbereich; und
Senden, durch die Kommunikationsschnittstelle, an einen Netzwerkknoten in dem Funknetzwerk, einer ersten Berichtsnachricht, die das jeweilige Energieniveau der gewonnenen elektromagnetischen Strahlung anzeigt, das über den mindestens einen Frequenzbereich gemessen wird.

2. Vorrichtung nach Anspruch 1, wobei das Lenken der gewonnenen elektromagnetischen Strahlungsenergie zu der mindestens einen Energiegewinnungsvorrichtung in einem Funknetzwerk auf der Grundlage der mindestens einen Anforderungsnachricht umfasst, dass die rekonfigurierbare intelligente Oberfläche veranlasst wird:
zu lenken, durch Auswählen mindestens eines besten Strahls, und die gewonnene Energie über den mindestens einen Frequenzbereich zu der mindestens einen Energiegewinnungsvorrichtung in dem Funknetzwerk zu übertragen, in Reaktion auf die mindestens eine Anforderungsnachricht und wenn das gemessene Energieniveau der gewonnenen elektromagnetischen Strahlung über den mindestens einen Frequenzbereich größer als ein Schwellenwert ist.

3. Vorrichtung nach Anspruch 2, wobei die rekonfigurierbare intelligente Oberfläche ferner veranlasst wird:
in Reaktion auf das Empfangen der mindestens einen Anforderungsnachricht eine Zuweisungsprüfungsoperation durchzuführen, um zu bestimmen, ob es eine Gruppe von passiven Elementen der rekonfigurierbaren intelligenten Oberfläche gibt, die verfügbar ist, um verwendet zu werden, um die gewonnene Energie innerhalb des mindestens einen Frequenzbereichs zu der mindestens einen Energiegewinnungsvorrichtung zu lenken.

4. Vorrichtung nach Anspruch 3, wobei die rekonfigurierbare intelligente Oberfläche, in Reaktion auf das Bestimmen, dass es eine Gruppe von passiven Elementen der rekonfigurierbaren intelligenten Oberfläche gibt, die verfügbar ist, um verwendet zu werden, um die gewonnene Energie über den mindestens einen Frequenzbereich zu der mindestens einen Energiegewinnungsvorrichtung zu lenken, ferner veranlasst wird:
die Gruppe von passiven Elementen der rekonfigurierbaren intelligenten Oberfläche zum Lenken der gewonnenen Energie innerhalb des mindestens einen Frequenzbereichs zu der mindestens einen Energiegewinnungsvorrichtung zuzuweisen;
Phasenverschiebungen der passiven Elemente der Gruppe von passiven Elementen der rekonfigurierbaren intelligenten Oberfläche anzupassen, um einen ersten Strahl einer Vielzahl von Strahlen gewonnener Energie zum Lenken der elektromagnetischen Strahlung zu erzeugen; und
eine zweite Berichtsnachricht an den Netzwerkknoten zu senden, die anzeigt, dass die Anforderungsnachricht akzeptiert ist.

5. Vorrichtung nach Anspruch 4, wobei die zweite Berichtsnachricht ferner eine Änderung des jeweiligen Energieniveaus der gewonnenen Energie über den mindestens einen Frequenzbereich anzeigt.

6. Vorrichtung nach Anspruch 1, wobei der mindestens eine Speicher und die Anweisungen ferner konfiguriert sind, um die Vorrichtung mindestens zu Folgendem zu veranlassen:
Empfangen, von dem Netzwerkknoten, einer dritten Nachricht, die anzeigt, dass die rekonfigurierbare intelligente Oberfläche für die mindestens eine Energiegewinnungsvorrichtung zugewiesene Ressourcen freigibt.

7. Vorrichtung nach Anspruch 1, wobei die rekonfigurierbare intelligente Oberfläche ferner veranlasst wird:
eine Strahlverfeinerungsoperation durchzuführen, um mindestens einen Strahl einer Vielzahl von Strahlen zum Lenken der gewonnenen Energie über den mindestens einen Frequenzbereich zu mindestens einer Energiegewinnungsvorrichtung zu bestimmen.

8. Vorrichtung nach Anspruch 7, wobei die rekonfigurierbare intelligente Oberfläche ferner veranlasst wird:
Phasenverschiebungen einer Gruppe von passiven Elementen der rekonfigurierbaren intelligenten Oberfläche anzupassen, um den mindestens einen Strahl der Vielzahl von Strahlen der elektromagnetischen Strahlung zu bilden und das Lenken der gewonnenen Energie über den mindestens einen Frequenzbereich zu der mindestens einen Energiegewinnungsvorrichtung zu ermöglichen.

9. Vorrichtung nach Anspruch 8, wobei der mindestens eine Strahl der Vielzahl von Strahlen elektromagnetischer Strahlung in Reaktion auf das Empfangen einer zweiten Nachricht von dem Netzwerkknoten gebildet wird, die anzeigt, dass die gewonnene Energie, die durch die mindestens eine Energiegewinnungsvorrichtung aus dem mindestens einen Strahl empfangen wird, nicht ausreichend ist.

10. Vorrichtung nach Anspruch 8, wobei die Vorrichtung mindestens veranlasst wird:
an den Netzwerkknoten eine erste Anzeigenachricht zu senden, dass das jeweilige Energieniveau der aus dem ersten Strahl empfangenen elektromagnetischen Strahlung geringer als ein durch die mindestens eine Energiegewinnungsvorrichtung geforderter Niveauschwellenwert ist; und
von dem Netzwerkknoten eine zweite Anzeigenachricht zu empfangen, dass das jeweilige Energieniveau der aus dem ersten Strahl empfangenen elektromagnetischen Strahlung unzureichend ist und mehr Energie aus einem zweiten Strahl zu der mindestens einen Energiegewinnungsvorrichtung gelenkt werden sollte.

11. Vorrichtung nach Anspruch 8, wobei die Vorrichtung mindestens veranlasst wird:
von dem Netzwerkknoten eine Freigabenachricht zu empfangen, die anzeigt, dass mindestens ein aktives Element der ersten rekonfigurierbaren intelligenten Oberfläche für die Energiegewinnungsvorrichtung zugewiesene Ressourcen freizugeben.

12. Vorrichtung nach Anspruch 1, wobei die passiven Elemente auf der rekonfigurierbaren intelligenten Oberfläche in mehrere Regionen partitioniert sind, wobei jede Region konfiguriert ist, um durch mindestens ein jeweiliges aktives Element gesteuert zu werden, um die elektromagnetische Strahlungsenergie über einen jeweiligen Frequenzbereich zu der mindestens einen Energiegewinnungsvorrichtung zu erfassen, zu gewinnen und zu lenken.

## Revendications

1. Appareil, comprenant :
une surface intelligente reconfigurable, RIS (430), dans un réseau radio (400), la surface intelligente reconfigurable comprenant une pluralité d'éléments passifs qui sont commandés par une pluralité d'éléments actifs répartis parmi la pluralité d'éléments passifs, dans lequel la pluralité d'éléments actifs configurent la surface intelligente reconfigurable pour effectuer, sur la base d'un message de requête provenant d'un nœud de réseau (440) dans le réseau radio :
détecter un rayonnement électromagnétique incident récupéré sur au moins une plage de fréquences par les éléments passifs ; et
diriger l'énergie du rayonnement électromagnétique récupéré vers au moins un dispositif de récupération d'énergie dans le réseau radio,
**caractérisé en ce que** l'au moins un de la pluralité d'éléments actifs comprend :
au moins un processeur ; et
au moins une mémoire stockant des instructions qui, lorsqu'elles sont exécutées par l'au moins un processeur, amènent la surface intelligente reconfigurable à effectuer, sur la base du message, la détection de l'énergie de rayonnement électromagnétique récupérée,
dans lequel la surface intelligente reconfigurable est en outre amenée à effectuer :
mesurer, par les capteurs ou la circuiterie de récupération d'énergie, un niveau d'énergie respectif du rayonnement électromagnétique récupéré sur l'au moins une plage de fréquences ; et
envoyer, par l'interface de communication, à un nœud de réseau dans le réseau radio, un premier message de rapport indiquant le niveau d'énergie respectif du rayonnement électromagnétique récupéré mesuré sur l'au moins une plage de fréquences.

2. Appareil selon la revendication 1, dans lequel la direction de l'énergie de rayonnement électromagnétique récupérée vers l'au moins un dispositif de récupération d'énergie dans un réseau radio sur la base de l'au moins un message de requête, comprend la surface intelligente reconfigurable amenée à :
diriger, en sélectionnant au moins un meilleur faisceau, et transmettre l'énergie récupérée sur l'au moins une plage de fréquences vers l'au moins un dispositif de récupération d'énergie dans le réseau radio, en réponse à l'au moins un message de requête et lorsque le niveau d'énergie mesuré du rayonnement électromagnétique récupéré sur l'au moins une plage de fréquences est supérieur à un seuil.

3. Appareil selon la revendication 2, dans lequel la surface intelligente reconfigurable est en outre amenée à :
en réponse à la réception de l'au moins un message de requête, effectuer une opération de vérification d'allocation pour déterminer s'il existe un groupe d'éléments passifs de la surface intelligente reconfigurable qui est disponible pour être utilisé pour diriger l'énergie récupérée dans l'au moins une plage de fréquences vers l'au moins un dispositif de récupération d'énergie.

4. Appareil selon la revendication 3, dans lequel la surface intelligente reconfigurable, en réponse à la détermination qu'il existe un groupe d'éléments passifs de la surface intelligente reconfigurable disponible pour être utilisé pour diriger l'énergie récupérée sur l'au moins une plage de fréquences vers l'au moins un dispositif de récupération d'énergie, est en outre amenée à :
allouer le groupe d'éléments passifs de la surface intelligente reconfigurable pour diriger l'énergie récupérée dans l'au moins une plage de fréquences vers l'au moins un dispositif de récupération d'énergie ;
ajuster les déphasages des éléments passifs du groupe d'éléments passifs de la surface intelligente reconfigurable pour produire un premier faisceau d'une pluralité de faisceaux d'énergie récupérée pour diriger le rayonnement électromagnétique ; et
envoyer un deuxième message de rapport au nœud de réseau indiquant que le message de requête est accepté.

5. Appareil selon la revendication 4, dans lequel le deuxième message de rapport indique en outre un changement du niveau respectif d'énergie de l'énergie récupérée sur l'au moins une plage de fréquences.

6. Appareil selon la revendication 1, dans lequel l'au moins une mémoire et les instructions sont en outre configurées pour amener l'appareil au moins à :
recevoir, du nœud de réseau, un troisième message indiquant que la surface intelligente reconfigurable libère des ressources allouées pour l'au moins un dispositif de récupération d'énergie.

7. Appareil selon la revendication 1, dans lequel la surface intelligente reconfigurable est en outre amenée à :
effectuer une opération d'affinement de faisceau pour déterminer au moins un faisceau d'une pluralité de faisceaux pour diriger l'énergie récupérée sur l'au moins une plage de fréquences vers au moins un dispositif de récupération d'énergie.

8. Appareil selon la revendication 7, dans lequel la surface intelligente reconfigurable est en outre amenée à :
ajuster les déphasages d'un groupe d'éléments passifs de la surface intelligente reconfigurable pour former l'au moins un faisceau de la pluralité de faisceaux du rayonnement électromagnétique et permettre de diriger l'énergie récupérée sur l'au moins une plage de fréquences vers l'au moins un dispositif de récupération d'énergie.

9. Appareil selon la revendication 8, dans lequel l'au moins un faisceau de la pluralité de faisceaux de rayonnement électromagnétique est formé en réponse à la réception d'un deuxième message provenant du nœud de réseau indiquant que l'énergie récupérée reçue par l'au moins un dispositif de récupération d'énergie à partir de l'au moins un faisceau n'est pas suffisante.

10. Appareil selon la revendication 8, dans lequel l'appareil est au moins amené à :
envoyer, au nœud de réseau, un premier message d'indication selon lequel le niveau d'énergie respectif du rayonnement électromagnétique reçu à partir du premier faisceau est inférieur à un seuil de niveau requis par l'au moins un dispositif de récupération d'énergie ; et
recevoir, du nœud de réseau, un deuxième message d'indication selon lequel le niveau d'énergie respectif du rayonnement électromagnétique reçu à partir du premier faisceau étant insuffisant et une plus grande quantité d'énergie provenant d'un deuxième faisceau devrait être dirigée vers l'au moins un dispositif de récupération d'énergie.

11. Appareil selon la revendication 8, dans lequel l'appareil est au moins amené à :
recevoir, du nœud de réseau, un message de libération indiquant qu'au moins un élément actif de la première surface intelligente reconfigurable à libérer des ressources allouées pour le dispositif de récupération d'énergie.

12. Appareil selon la revendication 1, dans lequel les éléments passifs sur la surface intelligente reconfigurable sont partitionnés en de multiples régions, chaque région étant configurée pour être commandée par au moins un élément actif respectif pour détecter, récupérer et diriger l'énergie de rayonnement électromagnétique sur une plage de fréquences respective vers l'au moins un dispositif de récupération d'énergie.
